# FASCICULE DE BREVET EUROPEEN

(11) **EP 2 826 588 B1**
(45) Date de publication et mention de la délivrance du brevet: **30.03.2016**
(21) Numéro de dépôt: 14177318.4
(22) Date de dépôt: 16.07.2014
(51) Int. Cl.: B23K 35/36, B23K 35/362, C22C 38/60, B23K 9/23, B23K 9/18

(54) **Flux et procédé de soudage à l'arc submergé des aciers à forte teneur en chrome**
Flussmittel und Prozeß zum Unterpulverschweißen von hohen Chrom-Stählen
Flux for submerged arc welding of high chromium steels and submerged arc welding process of high chromium steels

(30) Priorité: 18.07.2013 FR 1357047
(43) Date de publication de la demande: 21.01.2015
(73) Titulaire: AIR LIQUIDE WELDING FRANCE, 75007 Paris (FR)
(72) Inventeur: Derrien, Richard, 75015 Paris (FR); Ehrhart, Gilles, 33114 Le Barp (FR)
(74) Mandataire: Pittis, Olivier

(56) Documents cités:
- EP-A1- 0 255 753
- WO-A1-2010/066981
- FR-A1- 2 740 715
- FR-A5- 2 074 278
- JP-A- S5 261 142
- JP-A- S58 128 295
- CLERGE M ET AL: "OPTIMISATION OF INTERMEDIATE HEAT TREATMENTS AND STRESS RELIEF OF CRMOV STEELS", WELDING INTERNATIONAL, TAYLOR & FRANCIS, ABINGDON, GB, vol. 19, no. 11, 1 janvier 2005 (2005-01-01), pages 888-893, XP001239643, ISSN: 0950-7116, DOI: 10.1533/WINT.2005.3495

## Description

L'invention concerne un flux de soudage à base de lithium permettant d'améliorer le détachement du laitier lors du soudage des aciers à forte teneur en chrome, c'est-à-dire contenant plus de 5% en masse de chrome, en particulier les aciers contenant de 7 à 13% en masse de chrome, ainsi qu'un procédé de soudage à l'arc submergé desdits aciers à forte teneur en chrome mettant en oeuvre un tel flux de soudage à base de lithium.

Les aciers au carbone contenant typiquement de 7 à 13% en masse de chrome, encore appelés nuances 7-13% Cr, sont couramment utilisés pour fabriquer des matériels devant résister à des conditions extrêmes, notamment de fluage et d'oxydation.

Par exemple, le document EP-A-277065 propose un acier amagnétique au manganèse et au chrome résistant à la corrosion sous contrainte en milieu chloruré qui contient au plus 0,06 % de carbone, de 19 à 26 % de manganèse, de 7 à 13 % de chrome, environ 0,3 % d'azote et 0,6 % de silicium et des teneurs résiduelles en nickel et molybdène inférieures à 0,2 et 0,1 % respectivement, le reste étant constitué par du fer. Cet acier est utilisé pour fabriquer un élément tubulaire d'une colonne de forage.

De façon générale, les aciers à forte teneur en chrome, c'est-à-dire d'au moins 5 à 7%, sont utilisés pour fabriquer des éléments, en particulier des tubes.

Ces aciers à forte teneur en chrome sont généralement soudés par mise en oeuvre d'un procédé de soudage à l'arc submergé utilisant un flux de soudage venant protéger le joint de soudure pendant la formation du cordon de soudage.

Les flux de soudage sont habituellement formés de poudres et/ou de particules de différents composés ayant une granulométrie typiquement comprise entre 0.27 et 2.03 mm, par exemple des composés de type magnésie, alumine, spath fluor...

Ainsi, le document EP-A-2376256 enseigne un flux aggloméré de soudage comprenant, exprimé en % en poids de flux, de 0.1 à 0.6% de carbone, de 0.3 à 3% de manganèse, moins de 0.006% de soufre, moins de 0.015% de plomb, moins de à 0.025% de phosphore, de 0.1 à 0.8% de titane, moins de 0.02% d'antimoine destiné au soudage à l'arc submergé de pièces en acier CrMoV contenant de faibles proportions de chrome, à savoir de 2 à 2.5% en masse de chrome.

WO2010/066981 divulgue un flux aggloméré de soudage comprenant, exprimé en % en poids de flux, de 0.1 à 0.6% de carbone (C), de 0.3 à 3% de manganèse (Mn), moins de 0.006% de soufre (S), moins de 0.015% de plomb (Pb), moins de 0.025% de phosphore (P), de 0.1 à 0.8% de titane (Ti), moins de 0.02% d'antimoine (Sb), et avec : (% S) + (% Sb) + (% P) + (% Pb) < 0.040% où : (% S), (% Sb), (% P) et (% Pb) sont les quantités pondérales (exprimées en % en poids de flux) des éléments S, Sb, P et Pb, respectivement, dans le flux et un procédé de soudage à l'arc submergé des aciers CrMoV utilisant ce flux.

Lors du soudage, un laitier se forme habituellement sur le cordon de soudage par fusion d'éléments présents dans le flux. Ce laitier doit être éliminé après soudage, c'est-à-dire lorsque le cordon de soudage a été soudé.

Or, le détachement de laitier se formant lors du soudage d'aciers contenant des teneurs plus élevées de chrome, c'est-à-dire au moins 5% en masse, typiquement de 7 à 13% en masse de chrome, est un problème du fait de la forte concentration en chrome qu'ils renferment.

En effet, le chrome présent dans ces aciers plus fortement alliés, s'oxyde de façon notable lors du soudage, ce qui crée une couche importante d'oxydes de chrome entre le métal et le laitier qui va empêcher d'obtenir un détachement de laitier insuffisant car cette couche d'oxydes augmente l'adhérence du laitier au métal.

Le problème qui se pose est dès lors de proposer un flux de soudage amélioré utilisable en soudage à l'arc submergé des aciers à forte teneur en chrome (i.e. >5%), en particulier les aciers contenant de 7 à 13% en masse de chrome, pour améliorer le détachement de laitier, ainsi qu'un procédé de soudage à l'arc submergé mettant en oeuvre un tel flux.

La solution est un flux de soudage comprenant (% en masse de flux) de 10 à 35% de Mg, de 10 à 25% de Ca, de 7 à 20% de F, de 10 à 35% de Al, et de 0,10 à 7% de Li.

Selon le cas, le flux de l'invention peut comprendre l'une ou plusieurs des caractéristiques techniques suivantes :
- il comprend en outre (% en masse de flux) de 0,3 à 4% de Mn, de 0,5 à 3% de Fe, de 0,5 à 5% de Ba, de 0,25 à 5% de Na, de 1 à 4% de K, et de 1,5 à 6% de Si.
- il comprend au moins 0,20 % de Li.
- il comprend au moins 0,25 % de Li.
- il comprend en outre de l'oxygène.
- il comprend en outre des impuretés inévitables.
- le flux comprend en outre (% en masse de flux), l'un ou plusieurs des composés du tableau suivant :

| Composé | % masse |
|---|---|
| Mn | 0,25-4 |
| Fonte | 0,5-6 |
| MgO | 15-40 |
| BaCO₃ | 1-5 |
| CaF₂ | 15-40 |
| Al₂O₃ | 15-40 |
| Na₂O | 0.25-5 |
| K₂O | 0.5-6 |
| SiO₂ | 2-10 |
| CaO | 5-16 |
| LiF | 0.5-6 |

- il contient moins de 5% en masse de lithium (Li), de préférence moins de 3% en masse de lithium, de préférence encore moins de 2% en masse de lithium.
- il contient moins de 1% en masse de lithium (Li)
- le lithium est sous forme de fluorure de lithium (LiF), de chlorure de lithium (LiCl) et/ou de carbonate de lithium (Li₂CO₃).
- il contient une proportion massique de 0,1 à 6% de fluorure de lithium (LiF), de chlorure de lithium (LiCl) et/ou de carbonate de lithium (Li₂CO₃).
- il contient une proportion massique de 0,5 à 6 % de fluorure de lithium (LiF), de chlorure de lithium (LiCl) et/ou de carbonate de lithium (Li₂CO₃).

L'invention concerne aussi un procédé de soudage à l'arc submergé d'une ou plusieurs pièces en acier contenant au moins 5% de chrome, dans lequel on utilise un flux selon l'invention.

Selon le cas, le procédé de l'invention peut comprendre l'une ou plusieurs des caractéristiques techniques suivantes :
- l'on soude une ou plusieurs pièces en acier contenant de 5 à 15% de chrome, de préférence de 6 à 14% de chrome.
- l'on soude une ou plusieurs pièces en acier contenant de 7 à 13% de chrome.
- l'on soude une pièce mise sous forme d'un tube, c'est-à-dire un conduit, un tuyau, un pipeline...

En fait, l'addition de lithium au flux de soudage à l'arc submergé selon la présente invention permet une amélioration du détachement du laitier qui se forme sur les cordons de soudage lors d'une opération de soudage à l'arc submergé d'un acier au chrome, en particulier de nuances P91 contenant environ 9% de Cr, comme donné dans le Tableau 1 suivant.

**Tableau 1 : Composition de l'acier P91**

| Acier | C | Mn | P, S (max) | Si | Cr | Mo |
|---|---|---|---|---|---|---|
| P91 | 0.08-0.12 | 0.3-0.6 | 0.02/0.01 | 0.2-0.5 | 8-9.5 | 0.85-1.05 |

Le lithium peut être introduit dans le flux sous différente formes, notamment sous forme de fluorure de lithium (LiF), de chlorure de lithium (LiCl) et/ou de carbonate de lithium (Li₂CO₃). Toutefois, la forme de fluorure de lithium (LiF) est préférée.

Dans tous les cas, l'ajout de lithium se fait préférentiellement en une proportion de 0.1% à 0.8% massique dans le flux, en particulier lorsqu'il est destiné à être utilisé pour opérer un soudage à l'arc submergé d'acier contenant de 7 à 13% de chrome (% en masse) afin d'améliorer le détachement de laitier. En dessous de ces teneurs en lithium, on constate une augmentation non désirée des adhérences du laitier présentes sur le cordon.

### Exemples

Afin de démontrer l'amélioration du détachement du laitier lors d'un soudage d'acier à forte teneur en chrome (>5%), c'est-à-dire contenant de 7-13% en masse de chrome, plusieurs flux différents ont été fabriqués et testés.

Plus précisément, on a fabriqué plusieurs flux à base de lithium selon l'invention à partir d'un flux de référence donnée dans les Tableaux 2 et 3 ci-dessous.

**Tableau 2 : Composition élémentaire du flux de référence**

| Eléments | Teneur (% masse) |
|---|---|
| Mn | 0,56 |
| Fe | 1,30 |
| Mg | 16,14 |
| Ba | 1,95 |
| Ca | 19,69 |
| F | 11,60 |
| Al | 14,11 |
| Na | 0,31 |
| K | 1,50 |
| Si | 2,35 |

| | |
|---|---|
| Reste provient de l'oxygène et d'impuretés. | |

**Tableau 3 : Composition des phases du flux**

| Eléments | Teneur (% masse) |
|---|---|
| Mn | 0,56 |
| Fonte | 1,30 |
| MgO | 26,90 |
| BaCO₃ | 2,78 |
| CaF2 | 23,19 |
| Al₂O₃ | 26,62 |
| Na₂O | 0,42 |
| K₂O | 1,81 |
| SiO₂ | 5,01 |
| CaO | 11,41 |

Ensuite, on a ajouté au flux référence du lithium sous trois formes, à savoir fluorure de lithium (LiF), chlorure de lithium (LiCl) et carbonate de lithium (Li₂CO₃) et en des quantités allant de 1 à 3% en masse.

Ces flux de soudage ont été utilisés pour réaliser un soudage à l'arc submergé de pièces en acier P91 contenant environ 9% de chrome. Les conditions de soudage sont celles du Tableau 4.

**Tableau 4 : conditions de soudage mises en oeuvre**

| Source de puissance | Starmatic 650 DC |
|---|---|
| Plaque d'acier | P91 |
| Diamètre fil | 2.4-2.5 mm |
| Température préchauffage | 200°C |
| Polarité | CC+ |
| Courant | 330 A |
| Tension | 29 V |
| Vitesse de soudage | 50 cm/min |
| Apport de chaleur | 11 (kj/cm) |
| Vitesse d'alimentation fil | 1.7 m/min |
| Longueur d'électode sortie (stick out) | 25 mm |

On a ensuite comparé le détachement de laitier obtenu avec les trois flux additionnés de lithium testés avec celui du flux de référence.

Il a été constaté que les flux au lithium selon l'invention ne présentaient pas d'adhérences du laitier et ce, quelle que soit la forme du lithium ajouté.

Les résultats obtenus sont montrés sur les Figures 1 à 7 représentant l'état de surface du cordon de soudage (% en masse) :
- Figure 1 : obtenu avec le flux de référence ;
- Figures 2 et 3 : obtenu avec le flux de référence additionné de 1.5% et 3%, respectivement, de Li₂CO₃ ;
- Figure 4 : obtenu avec le flux de référence additionné de 0.75% de LiCl ; et
- Figures 5 à 7 : obtenu avec le flux de référence additionné de 1, 2 et 3%, respectivement, de LiF.

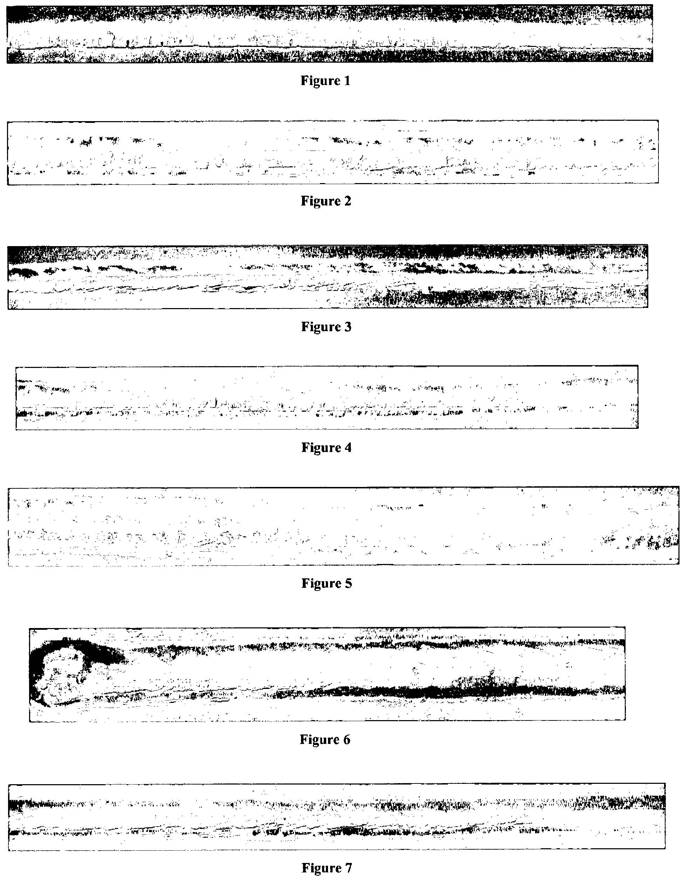

On constate, en comparant les Figures 2 et 3 obtenues avec le flux à base de lithium de l'invention à la Figure 1 obtenue avec le flux de référence que l'ajout de carbonate de lithium à hauteur de 1.5% (Figure 2) et 3% (Figure 3) dans la composition du flux de référence conduit à une amélioration notable du détachement du laitier du fait de cette addition de lithium puisque les surfaces des cordons obtenus (visibles sur les Fig. 2 et 3) sont moins couverts d'adhérences de laitiers que celui de la Figure 1. En fait, des teneurs de 1.5% et de 3% de Li₂CO₃ dans le flux représentent respectivement 0.34% et 0.68% massique de lithium dans le flux.

De manière analogue, la Figure 4 démontre que l'ajout de chlorure de lithium à hauteur de 0.75% dans le flux de référence permet d'améliorer aussi le détachement du laitier. La présence de 0.75% de LiCl dans le flux représente 0.16% massique de lithium dans le flux.

De même, le fluorure de lithium (LiF) qui a été ajouté à hauteur de 1% (Figure 5), 2% (Figure 6) et 3% (Figure 7), engendre un laitier facilement détachable et même quasiment « auto- détachable » à partir d'une teneur d'environ 2% de LiF ajouté à la formule du flux de référence.

En examinant l'oxydation des cordons, on remarque que le cordon du flux contenant 3% de LiF se détache plus facilement que le cordon du flux contenant 2% de LiF. En fait, plus le laitier se détache facilement et rapidement après sa formation, plus le cordon de soudage est chaud lorsqu'il rentre en contact avec l'air ambiant, ce qui conduit à une oxydation plus importante en surface du cordon.

Finalement, en comparant les trois flux, il ressort qu'augmenter la quantité de LiF, améliore le détachement de laitier. La présence de 1%, 2% et de 3% de LiF dans le flux représente respectivement 0.18%, 0.37% et 0.56% massique de lithium dans le flux.

Ces résultats montrent l'intérêt à utiliser un flux selon l'invention contenant typiquement (% en masse de flux) de 10 à 35% de Mg, de 10 à 25% de Ca, de 7 à 20% de F, de 10 à 35% de Al, et de 0,10 à 7% de Li, dans un procédé de soudage à l'arc submergé de pièces en acier contenant au moins 5% de chrome, à savoir ici de l'ordre de 9% de chrome.

## Revendications

1. Flux de soudage comprenant (% en masse de flux) de 10 à 35% de Mg, de 10 à 25% de Ca, de 7 à 20% de F, de 10 à 35% de Al, et de 0,10 à 7% de Li.

2. Flux selon la revendication précédente, **caractérisé en ce qu'**il comprend en outre (% en masse de flux) de 0,3 à 4% de Mn, de 0,5 à 3% de Fe, de 0,5 à 5% de Ba, de 0,25 à 5% de Na, de 1 à 4% de K, et de 1,5 à 6% de Si.

3. Flux selon l'une des revendications précédentes, **caractérisé en ce qu'**il comprend au moins 0,20 % de Li, de préférence au moins 0,25 % de Li.

4. Flux selon la revendication précédente, **caractérisé en ce qu'**il contient moins de 5% en masse de lithium (Li), de préférence moins de 3% en masse de lithium.

5. Flux selon l'une des revendications précédentes, **caractérisé en ce qu'**il contient moins de 1% en masse de lithium (Li)

6. Flux selon l'une des revendications précédentes, **caractérisé en ce que** le lithium est sous forme de fluorure de lithium (LiF), de chlorure de lithium (LiCl) et/ou de carbonate de lithium (Li₂CO₃).

7. Flux selon l'une des revendications précédentes, **caractérisé en ce qu'**il contient une proportion massique de 0,1 à 6 % de fluorure de lithium (LiF), de chlorure de lithium (LiCl) et/ou de carbonate de lithium (Li₂CO₃).

8. Flux selon l'une des revendications précédentes, **caractérisé en ce qu'**il contient une proportion massique de 0,5 à 6 % de fluorure de lithium (LiF), de chlorure de lithium (LiCl) et/ou de carbonate de lithium (Li₂CO₃).

9. Procédé de soudage à l'arc submergé d'une ou plusieurs pièces en acier contenant au moins 5% de chrome, dans lequel on utilise un flux selon l'une des revendications précédentes.

10. Procédé de soudage selon la revendication 9, **caractérisé en ce que** l'on soude une ou plusieurs pièces en acier contenant de 5 à 15% de chrome, de préférence de 6 à 14% de chrome.

11. Procédé de soudage selon l'une des revendications 9 ou 10, **caractérisé en ce que** l'on soude une ou plusieurs pièces en acier contenant de 7 à 13% de chrome.

12. Procédé de soudage selon l'une des revendications 9 à 11, **caractérisé en ce que** l'on soude une pièce mise sous forme d'un tube.

## Patentansprüche

1. Schweißflussmittel, das 10 bis 35 % Mg, 10 bis 25 % Ca, 7 bis 20 % F, 10 bis 35 % Al und 0,10 bis 7 % Li (jeweils bezogen auf die Masse des Flussmittels) umfasst.

2. Flussmittel nach dem vorhergehenden Anspruch, **dadurch gekennzeichnet, dass** es außerdem 0,3 bis 4 % Mn, 0,5 bis 3 % Fe, 0,5 bis 5 % Ba, 0,25 bis 5 % Na, 1 bis 4 % K und 1,5 bis 6 % Si (jeweils bezogen auf die Masse des Flussmittels) umfasst.

3. Flussmittel nach einem der vorhergehenden Ansprüche, **dadurch gekennzeichnet, dass** es mindestens 0,20 % Li, vorzugsweise mindestens 0,25 % Li umfasst.

4. Flussmittel nach dem vorhergehenden Anspruch, **dadurch gekennzeichnet, dass** es weniger als 5 Masse% Lithium (Li), vorzugsweise weniger als 3 Masse% Lithium enthält.

5. Flussmittel nach einem der vorhergehenden Ansprüche, **dadurch gekennzeichnet, dass** es weniger als 1 Masse% Lithium (Li) enthält.

6. Flussmittel nach einem der vorhergehenden Ansprüche, **dadurch gekennzeichnet, dass** das Lithium in Form von Lithiumfluorid (LiF), Lithiumchlorid (LiCl) und/oder Lithiumcarbonat (Li₂CO₃) vorliegt.

7. Flussmittel nach einem der vorhergehenden Ansprüche, **dadurch gekennzeichnet, dass** es einen Masseanteil von 0,1 bis 6 % Lithiumfluorid (LiF), Lithiumchlorid (LiCl) und/oder Lithiumcarbonat (Li₂CO₃) enthält.

8. Flussmittel nach einem der vorhergehenden Ansprüche, **dadurch gekennzeichnet, dass** es einen Masseanteil von 0,5 bis 6 % Lithiumfluorid (LiF), Lithiumchlorid (LiCl) und/oder Lithiumcarbonat (Li₂CO₃) enthält.

9. Verfahren zum Unterpulverschweißen eines Werkstücks oder mehrerer Werkstücke aus Stahl, der mindestens 5 % Chrom enthält, wobei man ein Flussmittel nach einem der vorhergehenden Ansprüche verwendet.

10. Verfahren zum Schweißen nach Anspruch 9, **dadurch gekennzeichnet, dass** man ein Werkstück oder mehrere Werkstücke aus Stahl schweißt, der 5 bis 15 % Chrom, vorzugsweise 6 bis 14 % Chrom enthält.

11. Verfahren zum Schweißen nach einem der Ansprüche 9 oder 10, **dadurch gekennzeichnet, dass** man ein Werkstück oder mehrere Werkstücke aus Stahl schweißt, der 7 bis 13 % Chrom enthält.

12. Verfahren zum Schweißen nach einem der Ansprüche 9 bis 11, **dadurch gekennzeichnet, dass** man ein Werkstück in Form eines Rohrs schweißt.

## Claims

1. Welding flux comprising (% by mass of flux) 10 to 35% Mg, 10 to 25% Ca, 7 to 20% F, 10 to 35% Al, and 0.10 to 7% Li.

2. Flux according to the above claim, **characterised in that** it further comprises (% by mass of flux) 0.3 to 4% Mn, 0.5 to 3% Fe, 0.5 to 5% Ba, 0.25 to 5% Na, 1 to 4% K, and 1.5 to 6% Si.

3. Flux according to any of the above claims, **characterised in that** it comprises at least 0.20% Li, preferably at least 0.25% Li.

4. Flux according to the above claim, **characterised in that** it contains less than 5% by mass of lithium (Li), preferably less than 3% by mass of lithium.

5. Flux according to any of the above claims, **characterised in that** it contains less than 1% by mass of lithium (Li).

6. Flux according to any of the above claims, **characterised in that** the lithium is in the form of lithium fluoride (LiF), lithium chloride (LiCl) and/or lithium carbonate (Li₂CO₃).

7. Flux according to any of the above claims, **characterised in that** it contains a proportion by mass of 0.1 to 6% lithium fluoride (LiF), lithium chloride (LiCl) and/or lithium carbonate (Li₂CO₃).

8. Flux according to any of the above claims, **characterised in that** it contains a proportion by mass of 0.5 to 6% lithium fluoride (LiF), lithium chloride (LiCl) and/or lithium carbonate (Li₂CO₃).

9. Method for submerged arc welding of one or a plurality of steel parts containing at least 5% chromium, wherein a flux according to any of the above claims is used.

10. Welding method according to claim 9, **characterised in that** one or a plurality of steel parts containing 5 to 15% chromium, preferably 6 to 14% chromium, is welded.

11. Welding method according to any of claims 9 or 10, **characterised in that** one or a plurality of steel parts containing 7 to 13% chromium is welded.

12. Welding method according to any of claims 9 to 11, **characterised in that** a part shaped in the form of a tube is welded.
